# EUROPEAN PATENT SPECIFICATION

(11) **EP 4 505 697 B1**
(45) Date of publication and mention of the grant of the patent: **21.01.2026**
(21) Application number: 23722664.2
(22) Date of filing: 10.04.2023
(51) Int. Cl.: H04L 69/22, H04W 80/02, H04W 88/08

(54) **ENHANCED CU-DU AND XN SIGNALING FOR XR AWARENESS**
VERBESSERTE CU-DU- UND XN-SIGNALISIERUNG FÜR XR-BEWUSSTSEIN
SIGNALISATION CU-DU ET XN AMÉLIORÉE DE PERCEPTION XR DE RÉALITÉ ÉTENDUE

(30) Priority: 08.04.2022 US 202263328948 P
(43) Date of publication of application: 12.02.2025
(73) Proprietor: Telefonaktiebolaget LM Ericsson (publ), 164 83 Stockholm (SE)
(72) Inventor: KANG, Du Ho, 192 51 Sollentuna (SE); PRADAS, Jose Luis, 118 27 Stockholm (SE); SHI, Nianshan, 176 74 Järfälla (SE); LYAZIDI, Mohammed Yazid, SE1 5ZW Greater London (GB)
(74) Representative: Ericsson
(86) International application number: PCT/IB2023/053641
(87) International publication number: WO 2023/194979

(56) References cited:
- EP-A1- 4 057 687
- WO-A1-2021/125610
- WO-A1-2021/142773

## Description

### Related Applications

This application claims the benefit of provisional patent application serial number 63/328,948, filed April 8, 2022.

### Technical Field

The current disclosure relates generally to signaling for eXtended Reality (XR) awareness.

### Background

5G is the fifth generation of mobile communications, addressing a wide range of use cases from Enhanced Mobile Broadband (eMBB) to Ultra-Reliable Low-Latency Communications (URLLC) to Massive Machine Type Communications (mMTC). 5G includes the New Radio (NR) access stratum interface and the 5G Core Network (5GC). The NR physical and higher layers are reusing parts of the LTE specification, and to that add needed components when motivated by new use cases.

Low-latency high-rate applications such as eXtended Reality (XR) and cloud gaming are important in 5G era. XR may refer to all real-and-virtual combined environments and human-machine interactions generated by computer technology and wearables. It is an umbrella term for different types of realities including Virtual Reality (VR), Augmented Reality (AR), Mixed Reality (MR), and the areas interpolated among them. The levels of virtuality range from partially sensory inputs to fully immersive VR.

5G NR is designed to support applications demanding high rate and low latency in line with the requirements posed by the support of XR and cloud gaming applications in NR networks. 3GPP Release 17 contains a study item on XR Evaluations for NR. The main objectives are to identify the traffic model for each application of interest, the evaluation methodology and the key performance indicators of interest for relevant deployment scenarios, and to carry out performance evaluations accordingly in order to investigate possible standardization enhancements in potential follow-up SI/WI.

### Low-latency high-rate XR applications

The low-latency applications like XR and cloud gaming require bounded latency, not necessarily ultra-low latency. The end-to-end latency budget may be in the range of 20-80 ms, which needs to be distributed over several components including application processing latency, transport latency, radio link latency, etc. For these applications, short transmission time intervals (TTIs) or mini-slots targeting ultra-low latency may not be effective.

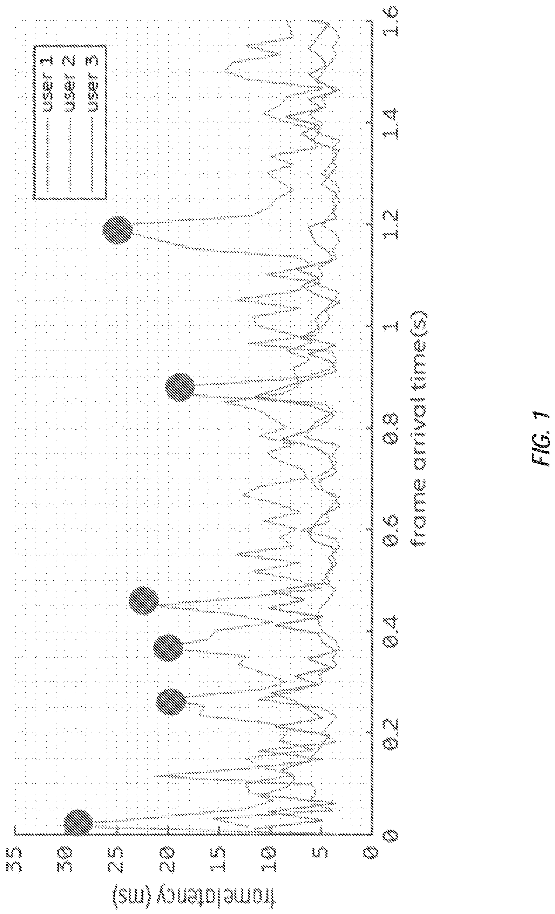

Figure 1 shows an example of frame latency measured over radio access network (RAN), excluding application and core network latencies. It can be seen that there exist frame latency spikes in RAN. The latency spike occurs due to instantaneous shortage of radio resources or inefficient radio resource allocation in response to varying frame size. The sources for the latency spikes may include queuing delay, time-varying radio environments, time-varying frame sizes, among others. Tools that can help to remove latency spikes are beneficial to enable better 5G support for this type of traffic

In addition to bounded latency requirements, the applications like XR and cloud gaming also require high-rate transmission. This can be seen from the large frame sizes originated from this type of traffic. The typical frame sizes may range from tens of kilobytes to hundreds of kilobytes. The frame arrival rates may be 60 or 120 frames per second (fps). As a concrete example, a frame size of 100 kilobytes and a frame arrival rate of 120 fps can lead to a rate requirement of 95.8 Mbps.

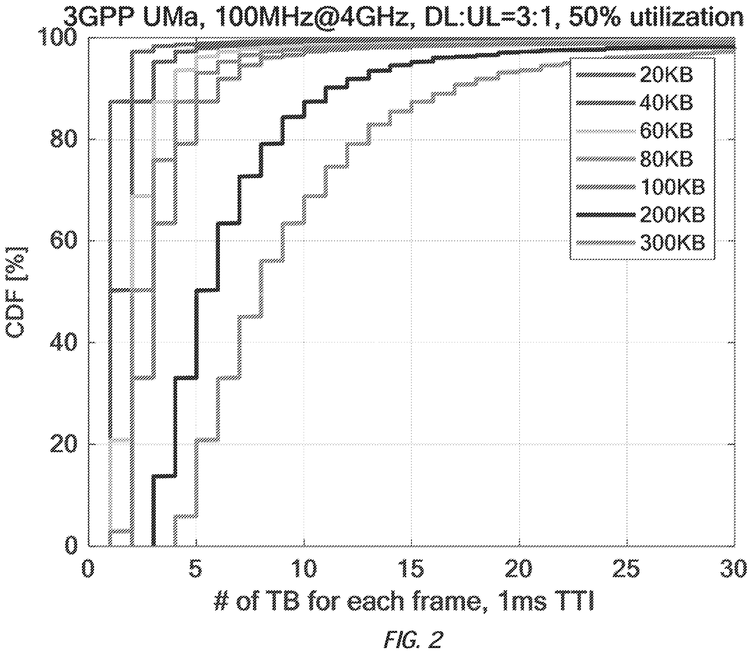

A large video frame is usually fragmented into smaller IP packets and transmitted as several Transport Blocks (TBs) over several TTIs in RAN. Figure 2 shows an example of the cumulative distribution functions of the number of transport blocks required to deliver a video frame with size ranging from 20 KB to 300 KB. For example, Figure 2 shows that for delivering the frames with a size of 200 KB each, the median number of needed TBs is 5.

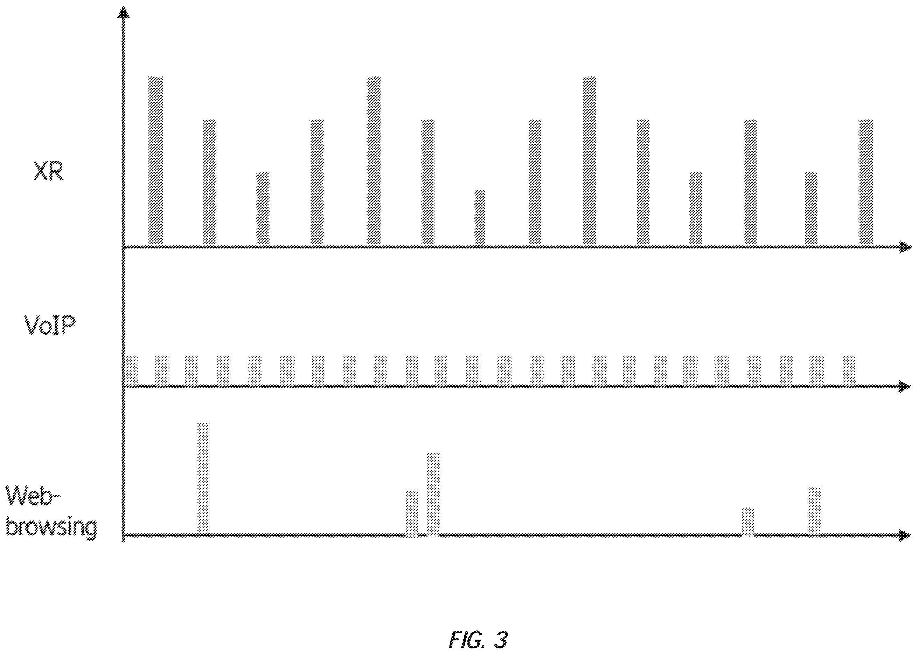

The characteristics of XR traffic arrival are quite distinct from typical web-browsing and VoIP traffic as shown in Figure 3. It is well expected that the arrival time is quasi-periodic and largely predictable as VoIP. However, its data size is order of magnitude larger than VoIP, as discussed above. In addition, similar to web-browsing, the data size is different at every application PDU arrival instance due to dynamics of contents and human motion.

There currently exist certain challenges.

WO 2021/142773 A1 discloses techniques for efficiently transmitting data over multiple radio access technologies (RATs), for example, between a base station and a user equipment (UE).

WO 2021/125610 A1 discloses a communication technique which merges, with IoT technology, a 5G communication system for supporting a data transmission rate higher than that of a 4G system, and a system therefor.
Improved systems and methods to handle XR services are needed.

### Summary

Systems and methods for signaling for eXtended Reality (XR) awareness are provided according to the independent claims. Developments are set forth in the dependent claims. In some embodiments, a method performed by a Centralized Unit (CU) of a base station includes: providing information to a Distributed Unit (DU) of the base station to indicate which groups of Radio Link Control (RLC) Service Data Units (SDUs) belong to a unique Application Data Unit (ADU) which needs to be delivered within the same time budget; and adding ADU related information on each Packet Data Convergence Protocol (PDCP) Protocol Data Unit (PDU) to allow RLC entity to be aware which RLC SDU belongs to which ADU. In this way, a RAN can discard a set of packets together which are no longer valid for the application. This results in network resources not being wasted and better management of the network capacity. This allows the network to more efficiently manage the resources and its scheduler so the network can better plan how to deliver the PDCP PDUs corresponding to an application PDUs within the defined time budget. This results in that the network can better deliver the committed QoS and sustain a quality of experience by avoiding unnecessary radio interference and allocation for unused large application PDU data. No impact on the air (Uu) interface and no impacts on the UE are foreseen.

Some embodiments of the current disclosure include: CU entity will add ADU related information on each PDCP PDU to allow RLC entity to be aware which RLC SDU belongs to which ADU so that the DU and the RLC layer can efficiently apply ADU-level resource allocation or cancellation, e.g., dropping in an ADU level.

In some embodiments, the CU entity will send a new type of flow control information on a ADU level. The ADU flow control indicates the different Packet Delay Budget (PDB) of the different PDCP PDUs of the ADU.

In some embodiments, the CU entity indicates to the DU which ADUs should be discarded by the RLC entity, if there are still some that are not transmitted to the UE.

In some embodiments, a timer is delivered together with the ADU from CU entity to DU entity. When the timer expires, RLC entity will discard the ADUs not transmitted. It may inform the PDCP entity.

Some embodiments of the current disclosure allow to: Provide information from the PDCP layer in CU to the RLC layer in DU to indicate which groups of RLC SDUs belong to a unique application PDU (ADU) which needs to be delivered within the same time budget or, else, dropped; Enable the decision of dropping of PDCP and/or RLC PDUs related to the ADU groups to be done at the RLC layer; Enable the RLC layer to discard the received ADU/PDCP PDU when the timer for discarding (signaled e.g., by PDCP entity) has expired.

### Brief Description of the Drawings

The accompanying drawing figures incorporated in and forming a part of this specification illustrate several aspects of the disclosure, and together with the description serve to explain the principles of the disclosure.
Figure 1 shows an example of frame latency measured over Radio Access Network (RAN), excluding application and core network latencies;
Figure 2 shows an example of the cumulative distribution functions of the number of transport blocks required to deliver a video frame with size ranging from 20 KB to 300 KB;
Figure 3 illustrates the characteristics of eXtended Reality (XR) traffic arrival are quite distinct from typical web-browsing and Voice over Internet Protocol (VoIP) traffic;
Figure 4 illustrates multiple PDCP packet arrivals from single application PDU to motivate group PDCP dropping and new F1 signaling between Centralized Unit (CU) and Distributed Unit (DU);
Figure 5A illustrates a F1 interface defined for control signaling between gNB-CU and gNB-DU;
Figure 5B illustrates a method performed by a CU of a base station, according to some embodiments of the current disclosure;
Figure 5C illustrates a method performed by a DU of a base station, according to some embodiments of the current disclosure;
Figure 6 shows an example of a communication system in accordance with some embodiments;
Figure 7 shows a User Equipment (UE) in accordance with some embodiments;
Figure 8 shows a network node in accordance with some embodiments;
Figure 9 is a block diagram of a host, which may be an embodiment of the host of Figure 6, in accordance with various aspects described herein;
Figure 10 is a block diagram illustrating a virtualization environment in which functions implemented by some embodiments may be virtualized; and
Figure 11 shows a communication diagram of a host communicating via a network node with a UE over a partially wireless connection in accordance with some embodiments.

### Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure.

eXtended Reality (XR) Application Protocol Data Units (PDUs) (herein, Application Data Unit (ADU) is used interchangeably) may have time constrains. This means that one or a set of application PDUs may need to reach the receiver within a certain period of time i.e., with a limited latency. If the application PDU(s) is/are not received by this time, the application PDU(s) is/are not of any use and can be discarded.

As indicated above, Packet Data Convergence Protocol (PDCP) starts a discard timer each time a PDCP SDU is received by higher layers. However, the PDCP layer does not have any indication of how many PDCP Service Data Units (SDUs) correspond to a certain application PDU (or how many IP PDUs correspond to one application PDU). IP packets reach PDCP with certain jitter as they may need to traverse the Internet as well as the 3GPP core network.

For example, one XR application PDU is segmented into five IP packets and each IP packet arrives in sequence or out of sequence to the PDCP layer at times X+delta1, X+delta2, and so on and so forth. Each packet will have a discard timer running with a certain time. At the same time, all these five PDCP SDUs (IP packets) must be delivered within a defined time budget. If the delay budget for the application packet is consumed, the five PDCP SDUs corresponding to the application packet can be discarded regardless of whether the PDCP discard timer is running or not.

The value of the current PDCP discard timer cannot depend on the number of PDCP SDUs which may correspond to a single application PDU because this (the number of PDCP SDUs which correspond to a single application PDU) may vary from application PDU to application PDU. Setting the PDCP discard timer to a fraction of the maximum latency of the application PDU may also impose a fictitious restriction which may lead to unnecessary discards. For example, if the maximum latency is 10 ms and the PDCP discard timer is set to 2 ms, any single PDCP PDU will be discarded 2 ms after it reaches PDCP. In the example above, it could be so that all 5 PDCP PDUs are transmitted at the same time after 7 ms from the reception of the first PDCP SDU. All PDPC PDUs may be delivered within the latency budget e.g., 10 ms; however, if the discard timer was a fraction of the latency budget, few packets would have been already discarded.

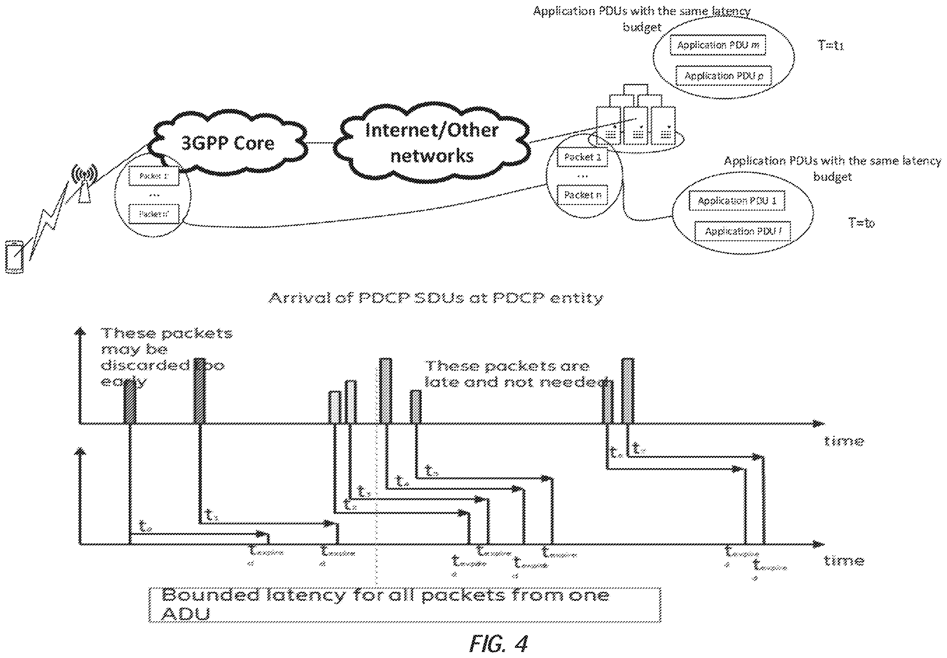

Figure 4 exemplifies the problem. Figure 4 illustrates multiple PDCP packet arrivals from single application PDU to motivate group PDCP dropping and new F1 signaling between Centralized Unit (CU) and Distributed Unit (DU). The application generates one or more application PDUs and all of the PDUs share the same latency budged i.e., they need to be delivered within a maximum latency time. The application may also generate other additional application PDUs with a different latency bound or may generate PDUs at a later time. These application PDUs may traverse one or more network or may be directly connected to a 3GPP network. In any case, these application PDUs may be adapted (e.g., segmented) by protocols below the application protocol to better fit the transmission properties. The challenge for the gNB (PDCP) is to identify the PDUs which belong to the set of application PDU set with the same latency bound and which ones need to be delivered first. For example, those generated in t0 may need to be delivered first than those generated in t1.

A similar issue could happen in the UL. It could be the case that more than one PDCP SDU related to one application PDU arrives to the PDCP layer from the application layer. The UE needs to receive UL grants to transmit these PDCP SDUs. It may be so that the uplink grants do not come in time or are not large enough so that, the time budget to deliver the application PDU is consumed and there are still PDCP SDUs related to the said application PDU pending for transmission. PDCP would still aim at transmitting those PDCP SDUs even if they are not any more useful for the receiving party. Additionally, trying to transmit those "late" PDCP SDUs may actually delay other PDCP SDUs related to a second application PDU coming after the first application PDU.

In other words, the current PDCP timer is not efficient to handle XR services due to the following reasons:

An XR application may produce one or more application PDUs which must be deliver within a delay budget. The application or layers below the application may segment/concatenate these application PDUs.

PDCP receivers from upper layers IP PDUs (if IP is used); however, PDCP does not have any information about how these PDCP SDU (IP PDUs) map to the application PDUs which need to be delivered within the same latency budget.

The existing PDCP discard timer for single PDCP SDU is not good enough to handle situations outlined in the bullets above.

When one application PDUs which should have been delivered within a certain latency bound are late, then the later application PDUs are no longer needed since the later application PDU will be dependent on the early application PDU for video decoding. The corresponding PDCP SDUs/PDUs should not then be transmitted either as it results in a waste of resources. However, existing independent discard timer between PDCP SDUs is not appropriate to handle this unique situation of XR traffic, i.e., allowing longer stay of PDCP SDU in the buffer although they are not needed any more from an application perspective.

### F1 interface

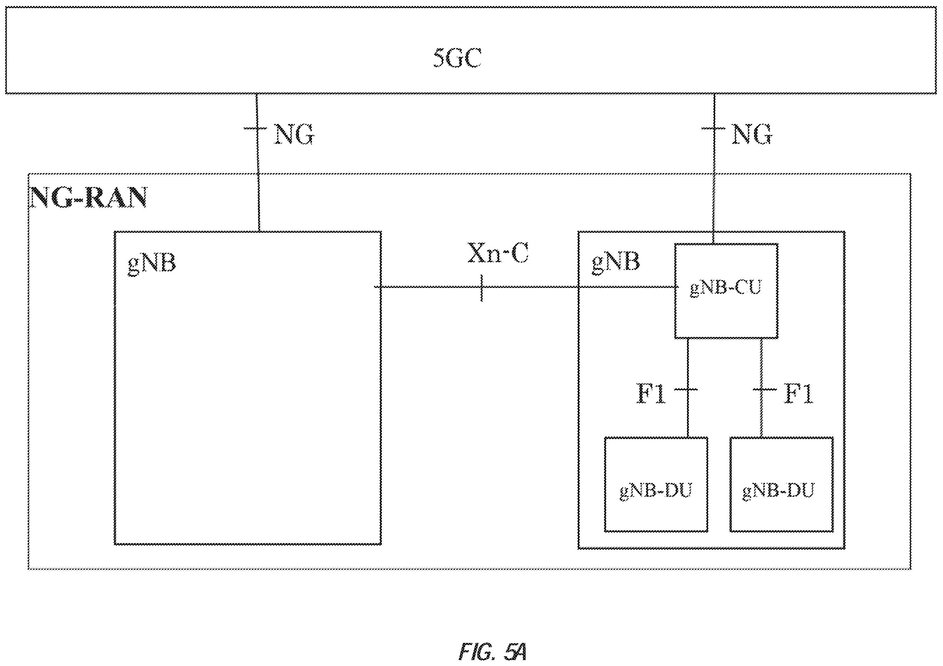

For downlink data, there is a F1 interface defined for control signaling between gNB-CU and gNB-DU. As shown in Figure 5A, this interface is responsible for possible information and control signaling from the PDCP entity located in CU and RLC entity located in DU. Previous disclosures were focused on the behavior of only PDCP entity. However, in a reality network, different modules are responsible for different protocol layers. Compared to the previous disclosures, this current disclosure discloses the F1 signaling aspects in order to ensure the dropped packets in CU should be indicated to DU via F1 interface to avoid any potential confusion in lower layers and potential redundant transmissions.

Systems and methods for signaling for XR awareness are provided. In some embodiments, a method performed by a Centralized Unit (CU) of a base station includes: providing information to a Distributed Unit (DU) of the base station to indicate which groups of Radio Link Control (RLC) Service Data Units (SDUs) belong to a unique Application Data Unit (ADU) which needs to be delivered within the same time budget; and adding ADU related information on each Packet Data Convergence Protocol (PDCP) Protocol Data Unit (PDU) to allow RLC entity to be aware which RLC SDU belongs to which ADU. In this way, a RAN can discard a set of packets together which are no longer valid for the application. This results in network resources not being wasted and better management of the network capacity. This allows the network to more efficiently manage the resources and its scheduler so the network can better plan how to deliver the PDCP PDUs corresponding to an application PDUs within the defined time budget. This results in that the network can better deliver the committed QoS and sustain a quality of experience by avoiding unnecessary radio interference and allocation for unused large application PDU data. No impact on the air (Uu) interface and no impacts on the UE are foreseen.

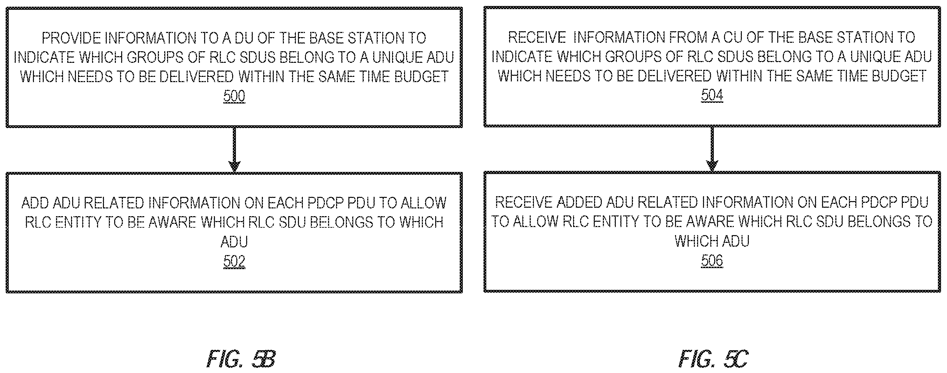

Figure 5B illustrates a method performed by a CU of a base station, according to some embodiments of the current disclosure. The CU provides information to a DU of the base station to indicate which groups of RLC SDUs belong to a unique ADU which needs to be delivered within the same time budget (step 500). The CU adds ADU related information on each PDCP PDU to allow RLC entity to be aware which RLC SDU belongs to which ADU (step 502).

Figure 5C illustrates a method performed by a DU of a base station, according to some embodiments of the current disclosure. The DU receives information from a CU of the base station to indicate which groups of RLC SDUs belong to a unique ADU which needs to be delivered within the same time budget (step 504). The DU receives added ADU related information on each PDCP PDU to allow RLC entity to be aware which RLC SDU belongs to which ADU (step 506).

Certain aspects of the disclosure and their embodiments may provide solutions to these or other challenges. Some embodiments of the current disclosure allow to:
Provide information from the PDCP layer in CU to the RLC layer in DU to indicate which groups of RLC SDUs belong to a unique application PDU (ADU) which needs to be delivered within the same time budget or, else, dropped,
Enable the decision of dropping of PDCP and/or RLC PDUs related to the ADU groups to be done at the RLC layer,
Enable the RLC layer to discard the received ADU/PDCP PDU when the timer for discarding (signaled e.g., by PDCP entity) has expired.

Some embodiments of the current disclosure include:
CU entity will add ADU related information on each PDCP PDU to allow RLC entity to be aware which RLC SDU belongs to which ADU so that the DU and the RLC layer can efficiently apply ADU-level resource allocation or cancellation, e.g., dropping in an ADU level.

CU entity will send a new type of flow control information on a ADU level. The ADU flow control indicates the different Packet Delay Budget (PDB) of the different PDCP PDUs of the ADU.

A CU entity indicates to the DU which ADUs should be discarded by the RLC entity, if there are still some that are not transmitted to the UE.

A timer is delivered together with the ADU from CU entity to DU entity. When the timer expires, RLC entity will discard the ADUs not transmitted. It may inform the PDCP entity.

Certain embodiments may provide one or more of the following technical advantage(s). Some embodiments include the following advantages: Allows a RAN to discard a set of packet together which are no longer valid for the application. This results in that network resources are not wasted and better management of the network capacity. Allows the network to more efficient manage the resources and its scheduler so the network can better plan how to deliver the PDCP PDUs corresponding to an application PDUs within the defined time budget. This results in that the network can better deliver the committed QoS and sustain a quality of experience by avoiding unnecessary radio interference and allocation for unused large application PDU data. No impact on the air (Uu) interface and no impacts on the UE are foreseen.

### Group PDCP dropping signaling

In the first embodiment, it is considered that a PDCP SDU does not belong to multiple ADUs. In other words, a PDCP SDU or multiple PDCP SDUs are specific for only one ADU. This embodiment is considered as the assumptions for all the other ones described below.

A CU can send a group RLC dropping command to DU when group PDCP dropping has been activated in CU. This command can be a separate control packet or added in header of a user plane data. Additional information below can be signaled to support the RLC dropping command.

In a first step, when IP packets associated to an ADU are received by the CU, the CU will indicate this association to the DU. That means that each PDCP PDU sent to the DU will carry an indication to associate the said PDCP PDU with the corresponding ADU. Thus, in one embodiment, an explicit ADU tag is added per ADU control flow over F1-U and Xn-U. Refer to the table below which illustrates an example to include the ADU tag in DL USER DATA (PDU Type 0) Format. gNB-DU stores the ADU tag together with the PDCP PDU and may use this information later when the discard is requested per ADU or ADU groups.

Below a non-limiting example from TS 38.425:
The following shows the respective DL USER DATA frame.

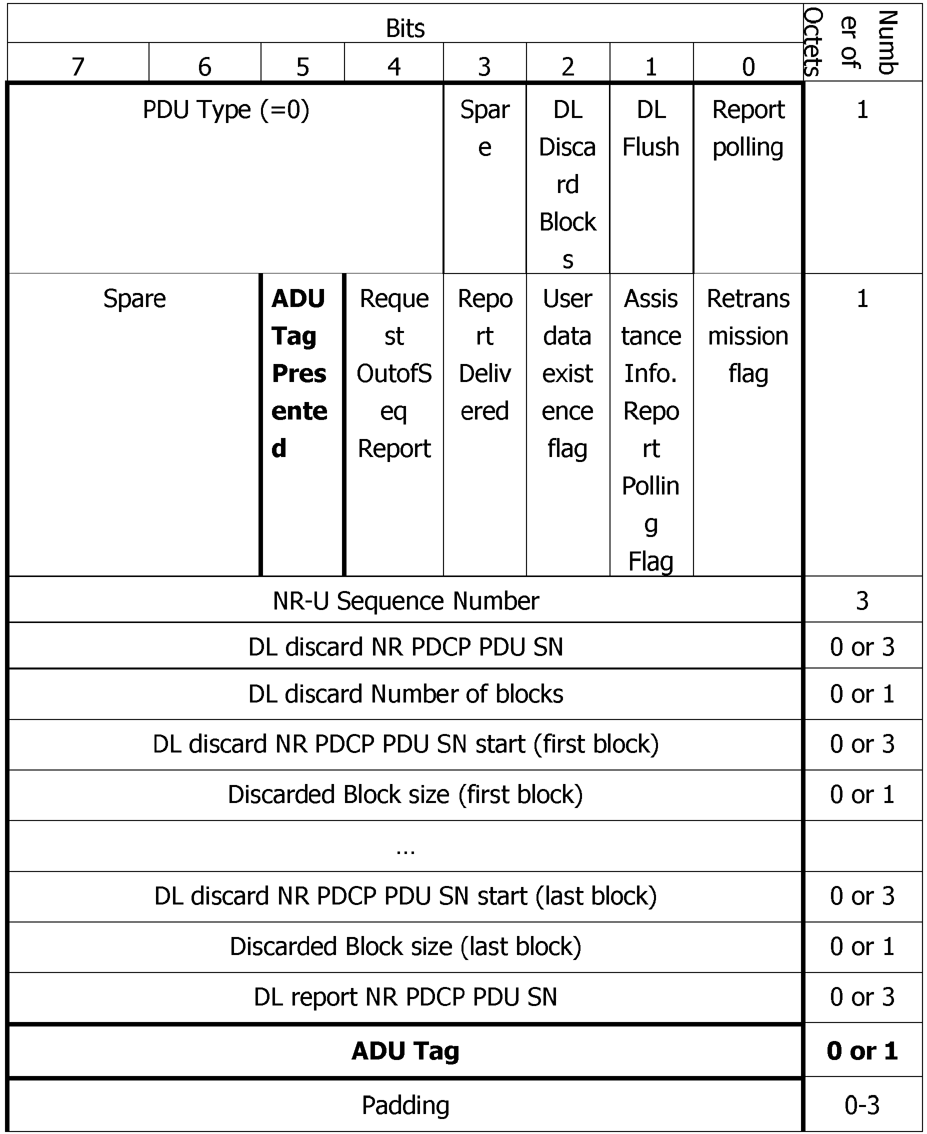

Examples of PDCP entity indicates the ADU tag for the given NR PDCP SN in TS 38.425:
*ADU tag presented*
   **Description:** This parameter indicates the presence of ADU tag.
   **Value range:** {0= ADU tag not present, 1= ADU tag present}.
   **Field length:** 1 bit.
*ADU tag*
   **Description:** This parameter indicates the NR ADU sequence number which can be assigned to one or multiple PDCP PDU(s) corresponding to the same ADU by the node hosting the NR PDCP
   **Value range:** {1 ... 255}.
   **Field length:** 1 octet.
   Note that the field length could be longer and so would be the value range.

When the CU decides that certain ADUs can be dropped, the CU transmits a command to the DU to drop those ADUs. This command may also include sequence number which exactly tells the range of RLC SDUs to be dropped. In some embodiments, the RLC SDUs do not have to be consecutive. One example is to include in e.g., DL USER DATA frame in TS 38.425 or introduce a new GTP-U extension header that the PDCP entity could discard the ADU/ADU groups by indicating the ADU tags of a block of ADU tags, when transfer DL USER Data. Since it is assumed that there is an association between ADUs and PDCP PDUs (RLC SDUs), the RLC entity can identify the affected RLC SDUs when an ADU is indicated.

An alternative to introducing an "ADU tag" field, is to re-use existing fields but changing the meaning of the field. In this case, an example of implementation could be to reuse the existing "DL discard NR PDCP PDU SN" and "DL discard NR PDCP PDU SN start", so one or more of the 3 octets are used to indicate ADU tag (if ADU tag uses one or more Octets). The RLC entity is informed that the discarding is performed per ADU or ADU groups. To achieve this purpose, the message should include a flag "Discard per ADU" which would assist the receiver to understand that the field aforementioned do not refer to legacy definition, but to the new definition for the given field. Refer to the table below which illustrates discarding based on ADU tags or ADU blocks.

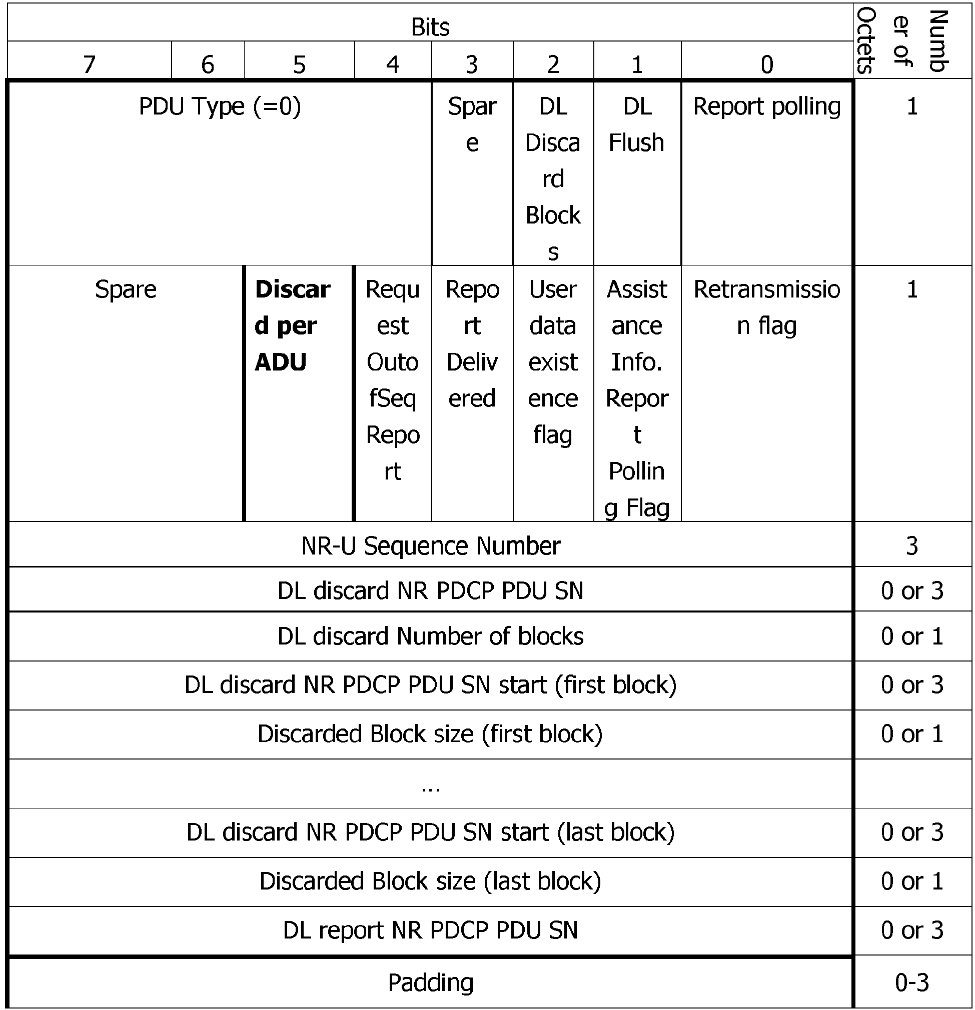

### Discard per ADU

**Description:** This parameter indicates if the discarding of the NR PDCP PDU is based on ADU.
**Value range:** {0= Discard not based on ADU, 1= Discarding based on ADU}.
**Field length:** 1 bit.

### DL discard NR PDCP PDU SN

**Description:** This parameter indicates the downlink NR discard PDCP PDU sequence number up to and including which all the NR PDCP PDUs should be discarded. If the Discard per ADU is present, the first octet indicates the ADU tag. The second and the third octets are set to zero.
**Value range:** {0 ... 2¹⁸-1}.
**Field length:** 3 octets.

### DL Discard Blocks

**Description:** This parameter indicates the presence of DL discard Number of blocks, DL discard NR PDCP PDU SN start and Discarded Block size. If the Discard per ADU is present, the discard blocks are ADUs.
**Value range:** {0= DL discard Number of blocks, DL discard NR PDCP PDU SN start and Discarded Block size not present, 1= DL discard Number of blocks, DL discard NR PDCP PDU SN start and Discarded Block size present}.
**Field length:** 1 bit.

### DL discard NR PDCP PDU SN start

**Description:** This parameter indicates the starting SN of a downlink NR PDCP PDU block to be discarded. If the Discard per ADU is present, the parameter indicates the starting tag of the ADU block.
**Value range:** {0 ... 2¹⁸-1}.
**Field length:** 3 octets.

### DL discard Number of blocks

**Description:** This parameter indicates the number of NR PDCP PDU blocks to be discarded.
   If the Discard per ADU is present, the parameter indicates the number of ADU blocks to be discarded.
**Value range:** {1 ... 244}.
**Field length:** 1 octet.

### Discarded Block size

**Description:** This parameter indicates the number of NR PDCP PDUs counted from the starting SN to be discarded. If the Discard per ADU is present, this parameter indicates the number of ADUs counted from the starting ADU to be discarded in sequence.
**Value range:** {1 ... 255}.
**Field length:** 1 octet.

### CU to mapping ADU to NR PDCP SN for discarding

If ADU tag is not explicitly signaled, gNB-CU creates the mapping between a given ADU and its corresponding PDCP SNs. When the CU decides that certain ADU or ADU groups need to be discarded at the RLC entity, the CU will indicate the impacted ADUs by selecting the associated PDCP PDU SNs to these ADUs and will indicate these PDCP PDU SN using the existing frame protocol to perform the discarding (note that this is a NW implementation solution).

### DU autonomous discarding

Previous section outlined mechanisms to explicitly indicate to the DU which ADUs had to be dropped. In this section, mechanisms that assist the DU deciding when to drop ADUs are listed.

In the second embodiment, instead of explicit dropping signaling, a CU can provide information needed for ADU dropping and a DU itself will decide which group of RLC packets are to be dropped.

For example, the CU entity includes a timer value for the ADUs that are supposed to be discarded when the timer expires. This can be the Packet Delay Budget (PDB) left. A value can be provided per each PDCP PDU associated to an ADU, or one PDB left can be provided applying to all associated PDCP PDUs for a given ADU. RLC entity keeps track of the timer using the indicated value. When the ADUs are not transmitted at the expiring timer, RLC entity discards these ADUs. The DU may further provide an indication to CU hosting the PDCP entity to confirm the action, e.g., the DU can prioritize the PDUs with low-PDB compared to the ones which have arrived before. PDCP entity could there after take action to retransmission or enhance by deploy PDCP duplications. The implementation in TS 38.425 included above could be having the timer value sent together with the ADU Tag. The timer value could be configured instead of signaled, e.g., based on the QoS requirement or other assistant information.

Besides, the CU entity holding the PDCP will provide information below to the DU entity hosting the RLC entity for autonomous dropping and the examples include:
- Application PDU indication (ADU) information as described herein in order to indicate the unit of packets to be dropped
- Application PDU latency requirement or remaining application PDU latency budget in a RLC layer or any other information needed for the timer
- Data rate of the application PDU

### Group PDCP dropping exemption signaling from DU to CU

In the third embodiment, a CU can provide another type of information that prevents unnecessary dropping when DU autonomous discarding is applied.

As non-limiting example, a new key video frame should be excluded from RLC dropping so that this protection information can be also signaled to DU.

In another embodiment, one mechanism to achieve this is not adding the timer value field. Another option is to signal the timer value and provide a second indication to indicate if the ADU is to be dropped or not when the timer expires. If this second field indicates that the RLC should not dropped the ADU when the timer expires, the RLC will not drop the ADU but aim at transmitting it whenever possible. This may also imply that the RLC entity might down-prioritize the transmission of the given ADU which the timer expired, if there are other RLC SDUs which timer is running.

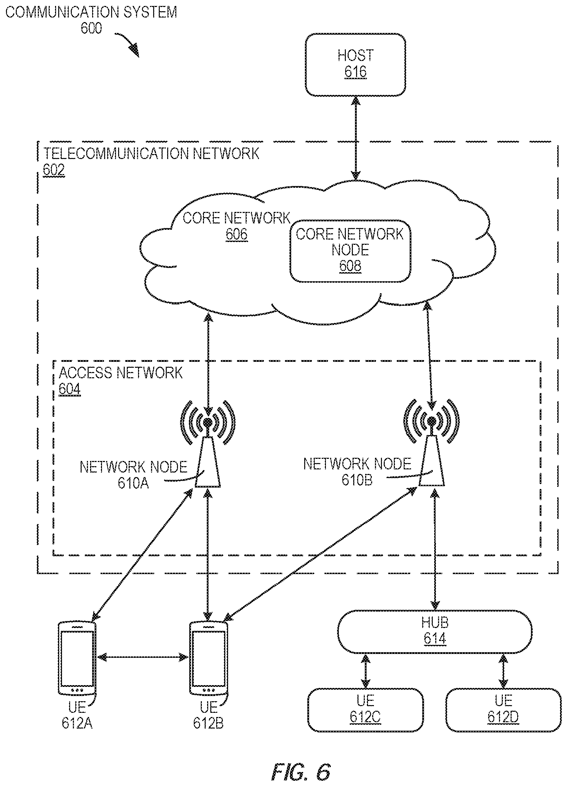

Figure 6 shows an example of a communication system 600 in accordance with some embodiments.

In the example, the communication system 600 includes a telecommunication network 602 that includes an access network 604, such as a Radio Access Network (RAN), and a core network 606, which includes one or more core network nodes 608. The access network 604 includes one or more access network nodes, such as network nodes 610A and 610B (one or more of which may be generally referred to as network nodes 610), or any other similar Third Generation Partnership Project (3GPP) access node or non-3GPP Access Point (AP). The network nodes 610 facilitate direct or indirect connection of User Equipment (UE), such as by connecting UEs 612A, 612B, 612C, and 612D (one or more of which may be generally referred to as UEs 612) to the core network 606 over one or more wireless connections.

Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, the communication system 600 may include any number of wired or wireless networks, network nodes, UEs, and/or any other components or systems that may facilitate or participate in the communication of data and/or signals whether via wired or wireless connections. The communication system 600 may include and/or interface with any type of communication, telecommunication, data, cellular, radio network, and/or other similar type of system.

The UEs 612 may be any of a wide variety of communication devices, including wireless devices arranged, configured, and/or operable to communicate wirelessly with the network nodes 610 and other communication devices. Similarly, the network nodes 610 are arranged, capable, configured, and/or operable to communicate directly or indirectly with the UEs 612 and/or with other network nodes or equipment in the telecommunication network 602 to enable and/or provide network access, such as wireless network access, and/or to perform other functions, such as administration in the telecommunication network 602.

In the depicted example, the core network 606 connects the network nodes 610 to one or more hosts, such as host 616. These connections may be direct or indirect via one or more intermediary networks or devices. In other examples, network nodes may be directly coupled to hosts. The core network 606 includes one more core network nodes (e.g., core network node 608) that are structured with hardware and software components. Features of these components may be substantially similar to those described with respect to the UEs, network nodes, and/or hosts, such that the descriptions thereof are generally applicable to the corresponding components of the core network node 608. Example core network nodes include functions of one or more of a Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-Concealing Function (SIDF), Unified Data Management (UDM), Security Edge Protection Proxy (SEPP), Network Exposure Function (NEF), and/or a User Plane Function (UPF).

The host 616 may be under the ownership or control of a service provider other than an operator or provider of the access network 604 and/or the telecommunication network 602, and may be operated by the service provider or on behalf of the service provider. The host 616 may host a variety of applications to provide one or more service. Examples of such applications include live and prerecorded audio/video content, data collection services such as retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, the communication system 600 of Figure 6 enables connectivity between the UEs, network nodes, and hosts. In that sense, the communication system 600 may be configured to operate according to predefined rules or procedures, such as specific standards that include, but are not limited to: Global System for Mobile Communications (GSM); Universal Mobile Telecommunications System (UMTS); Long Term Evolution (LTE), and/or other suitable Second, Third, Fourth, or Fifth Generation (2G, 3G, 4G, or 5G) standards, or any applicable future generation standard (e.g., Sixth Generation (6G)); Wireless Local Area Network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any Low Power Wide Area Network (LPWAN) standards such as LoRa and Sigfox.

In some examples, the telecommunication network 602 is a cellular network that implements 3GPP standardized features. Accordingly, the telecommunication network 602 may support network slicing to provide different logical networks to different devices that are connected to the telecommunication network 602. For example, the telecommunication network 602 may provide Ultra Reliable Low Latency Communication (URLLC) services to some UEs, while providing enhanced Mobile Broadband (eMBB) services to other UEs, and/or massive Machine Type Communication (mMTC)/massive Internet of Things (IoT) services to yet further UEs.

In some examples, the UEs 612 are configured to transmit and/or receive information without direct human interaction. For instance, a UE may be designed to transmit information to the access network 604 on a predetermined schedule, when triggered by an internal or external event, or in response to requests from the access network 604. Additionally, a UE may be configured for operating in single- or multi-Radio Access Technology (RAT) or multi-standard mode. For example, a UE may operate with any one or combination of WiFi, New Radio (NR), and LTE, i.e., be configured for Multi-Radio Dual Connectivity (MR-DC), such as Evolved UMTS Terrestrial RAN (E-UTRAN) NR - Dual Connectivity (EN-DC).

In the example, a hub 614 communicates with the access network 604 to facilitate indirect communication between one or more UEs (e.g., UE 612C and/or 612D) and network nodes (e.g., network node 610B). In some examples, the hub 614 may be a controller, router, content source and analytics, or any of the other communication devices described herein regarding UEs. For example, the hub 614 may be a broadband router enabling access to the core network 606 for the UEs. As another example, the hub 614 may be a controller that sends commands or instructions to one or more actuators in the UEs. Commands or instructions may be received from the UEs, network nodes 610, or by executable code, script, process, or other instructions in the hub 614. As another example, the hub 614 may be a data collector that acts as temporary storage for UE data and, in some embodiments, may perform analysis or other processing of the data. As another example, the hub 614 may be a content source. For example, for a UE that is a Virtual Reality (VR) headset, display, loudspeaker or other media delivery device, the hub 614 may retrieve VR assets, video, audio, or other media or data related to sensory information via a network node, which the hub 614 then provides to the UE either directly, after performing local processing, and/or after adding additional local content. In still another example, the hub 614 acts as a proxy server or orchestrator for the UEs, in particular in if one or more of the UEs are low energy IoT devices.

The hub 614 may have a constant/persistent or intermittent connection to the network node 610B. The hub 614 may also allow for a different communication scheme and/or schedule between the hub 614 and UEs (e.g., UE 612C and/or 612D), and between the hub 614 and the core network 606. In other examples, the hub 614 is connected to the core network 606 and/or one or more UEs via a wired connection. Moreover, the hub 614 may be configured to connect to a Machine-to-Machine (M2M) service provider over the access network 604 and/or to another UE over a direct connection. In some scenarios, UEs may establish a wireless connection with the network nodes 610 while still connected via the hub 614 via a wired or wireless connection. In some embodiments, the hub 614 may be a dedicated hub - that is, a hub whose primary function is to route communications to/from the UEs from/to the network node 610B. In other embodiments, the hub 614 may be a non-dedicated hub - that is, a device which is capable of operating to route communications between the UEs and the network node 610B, but which is additionally capable of operating as a communication start and/or end point for certain data channels.

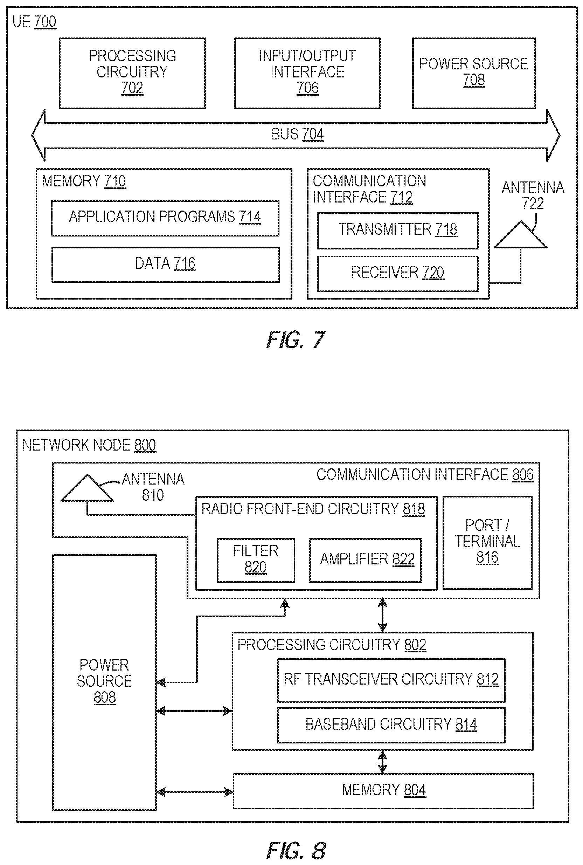

Figure 7 shows a UE 700 in accordance with some embodiments. As used herein, a UE refers to a device capable, configured, arranged, and/or operable to communicate wirelessly with network nodes and/or other UEs. Examples of a UE include, but are not limited to, a smart phone, mobile phone, cell phone, Voice over Internet Protocol (VoIP) phone, wireless local loop phone, desktop computer, Personal Digital Assistant (PDA), wireless camera, gaming console or device, music storage device, playback appliance, wearable terminal device, wireless endpoint, mobile station, tablet, laptop, Laptop Embedded Equipment (LEE), Laptop Mounted Equipment (LME), smart device, wireless Customer Premise Equipment (CPE), vehicle-mounted or vehicle embedded/integrated wireless device, etc. Other examples include any UE identified by the 3GPP, including a Narrowband Internet of Things (NB-IoT) UE, a Machine Type Communication (MTC) UE, and/or an enhanced MTC (eMTC) UE.

A UE may support Device-to-Device (D2D) communication, for example by implementing a 3GPP standard for sidelink communication, Dedicated Short-Range Communication (DSRC), Vehicle-to-Vehicle (V2V), Vehicle-to-Infrastructure (V2I), or Vehicle-to-Everything (V2X). In other examples, a UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter).

The UE 700 includes processing circuitry 702 that is operatively coupled via a bus 704 to an input/output interface 706, a power source 708, memory 710, a communication interface 712, and/or any other component, or any combination thereof. Certain UEs may utilize all or a subset of the components shown in Figure 7. The level of integration between the components may vary from one UE to another UE. Further, certain UEs may contain multiple instances of a component, such as multiple processors, memories, transceivers, transmitters, receivers, etc.

The processing circuitry 702 is configured to process instructions and data and may be configured to implement any sequential state machine operative to execute instructions stored as machine-readable computer programs in the memory 710. The processing circuitry 702 may be implemented as one or more hardware-implemented state machines (e.g., in discrete logic, Field Programmable Gate Arrays (FPGAs), Application Specific Integrated Circuits (ASICs), etc.); programmable logic together with appropriate firmware; one or more stored computer programs, general purpose processors, such as a microprocessor or Digital Signal Processor (DSP), together with appropriate software; or any combination of the above. For example, the processing circuitry 702 may include multiple Central Processing Units (CPUs).

In the example, the input/output interface 706 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into the UE 700. Examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, the power source 708 is structured as a battery or battery pack. Other types of power sources, such as an external power source (e.g., an electricity outlet), photovoltaic device, or power cell, may be used. The power source 708 may further include power circuitry for delivering power from the power source 708 itself, and/or an external power source, to the various parts of the UE 700 via input circuitry or an interface such as an electrical power cable. Delivering power may be, for example, for charging the power source 708. Power circuitry may perform any formatting, converting, or other modification to the power from the power source 708 to make the power suitable for the respective components of the UE 700 to which power is supplied.

The memory 710 may be or be configured to include memory such as Random Access Memory (RAM), Read Only Memory (ROM), Programmable ROM (PROM), Erasable PROM (EPROM), Electrically EPROM (EEPROM), magnetic disks, optical disks, hard disks, removable cartridges, flash drives, and so forth. In one example, the memory 710 includes one or more application programs 714, such as an operating system, web browser application, a widget, gadget engine, or other application, and corresponding data 716. The memory 710 may store, for use by the UE 700, any of a variety of various operating systems or combinations of operating systems.

The memory 710 may be configured to include a number of physical drive units, such as Redundant Array of Independent Disks (RAID), flash memory, USB flash drive, external hard disk drive, thumb drive, pen drive, key drive, High Density Digital Versatile Disc (HD-DVD) optical disc drive, internal hard disk drive, Blu-Ray optical disc drive, Holographic Digital Data Storage (HDDS) optical disc drive, external mini Dual In-line Memory Module (DIMM), Synchronous Dynamic RAM (SDRAM), external micro-DIMM SDRAM, smartcard memory such as a tamper resistant module in the form of a Universal Integrated Circuit Card (UICC) including one or more Subscriber Identity Modules (SIMs), such as a Universal SIM (USIM) and/or Internet Protocol Multimedia Services Identity Module (ISIM), other memory, or any combination thereof. The UICC may for example be an embedded UICC (eUICC), integrated UICC (iUICC) or a removable UICC commonly known as a 'SIM card.' The memory 710 may allow the UE 700 to access instructions, application programs, and the like stored on transitory or non-transitory memory media, to off-load data, or to upload data. An article of manufacture, such as one utilizing a communication system, may be tangibly embodied as or in the memory 710, which may be or comprise a device-readable storage medium.

The processing circuitry 702 may be configured to communicate with an access network or other network using the communication interface 712. The communication interface 712 may comprise one or more communication subsystems and may include or be communicatively coupled to an antenna 722. The communication interface 712 may include one or more transceivers used to communicate, such as by communicating with one or more remote transceivers of another device capable of wireless communication (e.g., another UE or a network node in an access network). Each transceiver may include a transmitter 718 and/or a receiver 720 appropriate to provide network communications (e.g., optical, electrical, frequency allocations, and so forth). Moreover, the transmitter 718 and receiver 720 may be coupled to one or more antennas (e.g., the antenna 722) and may share circuit components, software, or firmware, or alternatively be implemented separately.

In the illustrated embodiment, communication functions of the communication interface 712 may include cellular communication, WiFi communication, LPWAN communication, data communication, voice communication, multimedia communication, short-range communications such as Bluetooth, NFC, location-based communication such as the use of the Global Positioning System (GPS) to determine a location, another like communication function, or any combination thereof. Communications may be implemented according to one or more communication protocols and/or standards, such as IEEE 802.11, Code Division Multiplexing Access (CDMA), Wideband CDMA (WCDMA), GSM, LTE, NR, UMTS, WiMax, Ethernet, Transmission Control Protocol/Internet Protocol (TCP/IP), Synchronous Optical Networking (SONET), Asynchronous Transfer Mode (ATM), Quick User Datagram Protocol Internet Connection (QUIC), Hypertext Transfer Protocol (HTTP), and so forth.

Regardless of the type of sensor, a UE may provide an output of data captured by its sensors, through its communication interface 712, or via a wireless connection to a network node. Data captured by sensors of a UE can be communicated through a wireless connection to a network node via another UE. The output may be periodic (e.g., once every 15 minutes if it reports the sensed temperature), random (e.g., to even out the load from reporting from several sensors), in response to a triggering event (e.g., when moisture is detected an alert is sent), in response to a request (e.g., a user initiated request), or a continuous stream (e.g., a live video feed of a patient).

As another example, a UE comprises an actuator, a motor, or a switch related to a communication interface configured to receive wireless input from a network node via a wireless connection. In response to the received wireless input the states of the actuator, the motor, or the switch may change. For example, the UE may comprise a motor that adjusts the control surfaces or rotors of a drone in flight according to the received input or to a robotic arm performing a medical procedure according to the received input.

A UE, when in the form of an IoT device, may be a device for use in one or more application domains, these domains comprising, but not limited to, city wearable technology, extended industrial application, and healthcare. Non-limiting examples of such an IoT device are a device which is or which is embedded in: a connected refrigerator or freezer, a television, a connected lighting device, an electricity meter, a robot vacuum cleaner, a voice controlled smart speaker, a home security camera, a motion detector, a thermostat, a smoke detector, a door/window sensor, a flood/moisture sensor, an electrical door lock, a connected doorbell, an air conditioning system like a heat pump, an autonomous vehicle, a surveillance system, a weather monitoring device, a vehicle parking monitoring device, an electric vehicle charging station, a smart watch, a fitness tracker, a head-mounted display for Augmented Reality (AR) or VR, a wearable for tactile augmentation or sensory enhancement, a water sprinkler, an animal- or item-tracking device, a sensor for monitoring a plant or animal, an industrial robot, an Unmanned Aerial Vehicle (UAV), and any kind of medical device, like a heart rate monitor or a remote controlled surgical robot. A UE in the form of an IoT device comprises circuitry and/or software in dependence of the intended application of the IoT device in addition to other components as described in relation to the UE 700 shown in Figure 7.

As yet another specific example, in an IoT scenario, a UE may represent a machine or other device that performs monitoring and/or measurements and transmits the results of such monitoring and/or measurements to another UE and/or a network node. The UE may in this case be an M2M device, which may in a 3GPP context be referred to as an MTC device. As one particular example, the UE may implement the 3GPP NB-IoT standard. In other scenarios, a UE may represent a vehicle, such as a car, a bus, a truck, a ship, an airplane, or other equipment that is capable of monitoring and/or reporting on its operational status or other functions associated with its operation.

In practice, any number of UEs may be used together with respect to a single use case. For example, a first UE might be or be integrated in a drone and provide the drone's speed information (obtained through a speed sensor) to a second UE that is a remote controller operating the drone. When the user makes changes from the remote controller, the first UE may adjust the throttle on the drone (e.g., by controlling an actuator) to increase or decrease the drone's speed. The first and/or the second UE can also include more than one of the functionalities described above. For example, a UE might comprise the sensor and the actuator and handle communication of data for both the speed sensor and the actuators.

Figure 8 shows a network node 800 in accordance with some embodiments. As used herein, network node refers to equipment capable, configured, arranged, and/or operable to communicate directly or indirectly with a UE and/or with other network nodes or equipment in a telecommunication network. Examples of network nodes include, but are not limited to, APs (e.g., radio APs), Base Stations (BSs) (e.g., radio BSs, Node Bs, evolved Node Bs (eNBs), and NR Node Bs (gNBs)).

BSs may be categorized based on the amount of coverage they provide (or, stated differently, their transmit power level) and so, depending on the provided amount of coverage, may be referred to as femto BSs, pico BSs, micro BSs, or macro BSs. A BS may be a relay node or a relay donor node controlling a relay. A network node may also include one or more (or all) parts of a distributed radio BS such as centralized digital units and/or Remote Radio Units (RRUs), sometimes referred to as Remote Radio Heads (RRHs). Such RRUs may or may not be integrated with an antenna as an antenna integrated radio. Parts of a distributed radio BS may also be referred to as nodes in a Distributed Antenna System (DAS).

Other examples of network nodes include multiple Transmission Point (multi-TRP) 5G access nodes, Multi-Standard Radio (MSR) equipment such as MSR BSs, network controllers such as Radio Network Controllers (RNCs) or BS Controllers (BSCs), Base Transceiver Stations (BTSs), transmission points, transmission nodes, Multi-Cell/Multicast Coordination Entities (MCEs), Operation and Maintenance (O&M) nodes, Operations Support System (OSS) nodes, Self-Organizing Network (SON) nodes, positioning nodes (e.g., Evolved Serving Mobile Location Centers (E-SMLCs)), and/or Minimization of Drive Tests (MDTs).

The network node 800 includes processing circuitry 802, memory 804, a communication interface 806, and a power source 808. The network node 800 may be composed of multiple physically separate components (e.g., a Node B component and an RNC component, or a BTS component and a BSC component, etc.), which may each have their own respective components. In certain scenarios in which the network node 800 comprises multiple separate components (e.g., BTS and BSC components), one or more of the separate components may be shared among several network nodes. For example, a single RNC may control multiple Node Bs. In such a scenario, each unique Node B and RNC pair may in some instances be considered a single separate network node. In some embodiments, the network node 800 may be configured to support multiple RATs. In such embodiments, some components may be duplicated (e.g., separate memory 804 for different RATs) and some components may be reused (e.g., an antenna 810 may be shared by different RATs). The network node 800 may also include multiple sets of the various illustrated components for different wireless technologies integrated into network node 800, for example GSM, WCDMA, LTE, NR, WiFi, Zigbee, Z-wave, Long Range Wide Area Network (LoRaWAN), Radio Frequency Identification (RFID), or Bluetooth wireless technologies. These wireless technologies may be integrated into the same or different chip or set of chips and other components within the network node 800.

The processing circuitry 802 may comprise a combination of one or more of a microprocessor, controller, microcontroller, CPU, DSP, ASIC, FPGA, or any other suitable computing device, resource, or combination of hardware, software, and/or encoded logic operable to provide, either alone or in conjunction with other network node 800 components, such as the memory 804, to provide network node 800 functionality.

In some embodiments, the processing circuitry 802 includes a System on a Chip (SOC). In some embodiments, the processing circuitry 802 includes one or more of Radio Frequency (RF) transceiver circuitry 812 and baseband processing circuitry 814. In some embodiments, the RF transceiver circuitry 812 and the baseband processing circuitry 814 may be on separate chips (or sets of chips), boards, or units, such as radio units and digital units. In alternative embodiments, part or all of the RF transceiver circuitry 812 and the baseband processing circuitry 814 may be on the same chip or set of chips, boards, or units.

The memory 804 may comprise any form of volatile or non-volatile computer-readable memory including, without limitation, persistent storage, solid state memory, remotely mounted memory, magnetic media, optical media, RAM, ROM, mass storage media (for example, a hard disk), removable storage media (for example, a flash drive, a Compact Disk (CD), or a Digital Video Disk (DVD)), and/or any other volatile or non-volatile, non-transitory device-readable, and/or computer-executable memory devices that store information, data, and/or instructions that may be used by the processing circuitry 802. The memory 804 may store any suitable instructions, data, or information, including a computer program, software, an application including one or more of logic, rules, code, tables, and/or other instructions capable of being executed by the processing circuitry 802 and utilized by the network node 800. The memory 804 may be used to store any calculations made by the processing circuitry 802 and/or any data received via the communication interface 806. In some embodiments, the processing circuitry 802 and the memory 804 are integrated.

The communication interface 806 is used in wired or wireless communication of signaling and/or data between a network node, access network, and/or UE. As illustrated, the communication interface 806 comprises port(s)/terminal(s) 816 to send and receive data, for example to and from a network over a wired connection. The communication interface 806 also includes radio front-end circuitry 818 that may be coupled to, or in certain embodiments a part of, the antenna 810. The radio front-end circuitry 818 comprises filters 820 and amplifiers 822. The radio front-end circuitry 818 may be connected to the antenna 810 and the processing circuitry 802. The radio front-end circuitry 818 may be configured to condition signals communicated between the antenna 810 and the processing circuitry 802. The radio front-end circuitry 818 may receive digital data that is to be sent out to other network nodes or UEs via a wireless connection. The radio front-end circuitry 818 may convert the digital data into a radio signal having the appropriate channel and bandwidth parameters using a combination of the filters 820 and/or the amplifiers 822. The radio signal may then be transmitted via the antenna 810. Similarly, when receiving data, the antenna 810 may collect radio signals which are then converted into digital data by the radio front-end circuitry 818. The digital data may be passed to the processing circuitry 802. In other embodiments, the communication interface 806 may comprise different components and/or different combinations of components.

In certain alternative embodiments, the network node 800 does not include separate radio front-end circuitry 818; instead, the processing circuitry 802 includes radio front-end circuitry and is connected to the antenna 810. Similarly, in some embodiments, all or some of the RF transceiver circuitry 812 is part of the communication interface 806. In still other embodiments, the communication interface 806 includes the one or more ports or terminals 816, the radio front-end circuitry 818, and the RF transceiver circuitry 812 as part of a radio unit (not shown), and the communication interface 806 communicates with the baseband processing circuitry 814, which is part of a digital unit (not shown).

The antenna 810 may include one or more antennas, or antenna arrays, configured to send and/or receive wireless signals. The antenna 810 may be coupled to the radio front-end circuitry 818 and may be any type of antenna capable of transmitting and receiving data and/or signals wirelessly. In certain embodiments, the antenna 810 is separate from the network node 800 and connectable to the network node 800 through an interface or port.

The antenna 810, the communication interface 806, and/or the processing circuitry 802 may be configured to perform any receiving operations and/or certain obtaining operations described herein as being performed by the network node 800. Any information, data, and/or signals may be received from a UE, another network node, and/or any other network equipment. Similarly, the antenna 810, the communication interface 806, and/or the processing circuitry 802 may be configured to perform any transmitting operations described herein as being performed by the network node 800. Any information, data, and/or signals may be transmitted to a UE, another network node, and/or any other network equipment.

The power source 808 provides power to the various components of the network node 800 in a form suitable for the respective components (e.g., at a voltage and current level needed for each respective component). The power source 808 may further comprise, or be coupled to, power management circuitry to supply the components of the network node 800 with power for performing the functionality described herein. For example, the network node 800 may be connectable to an external power source (e.g., the power grid or an electricity outlet) via input circuitry or an interface such as an electrical cable, whereby the external power source supplies power to power circuitry of the power source 808. As a further example, the power source 808 may comprise a source of power in the form of a battery or battery pack which is connected to, or integrated in, power circuitry. The battery may provide backup power should the external power source fail.

Embodiments of the network node 800 may include additional components beyond those shown in Figure 8 for providing certain aspects of the network node's functionality, including any of the functionality described herein and/or any functionality necessary to support the subject matter described herein. For example, the network node 800 may include user interface equipment to allow input of information into the network node 800 and to allow output of information from the network node 800. This may allow a user to perform diagnostic, maintenance, repair, and other administrative functions for the network node 800.

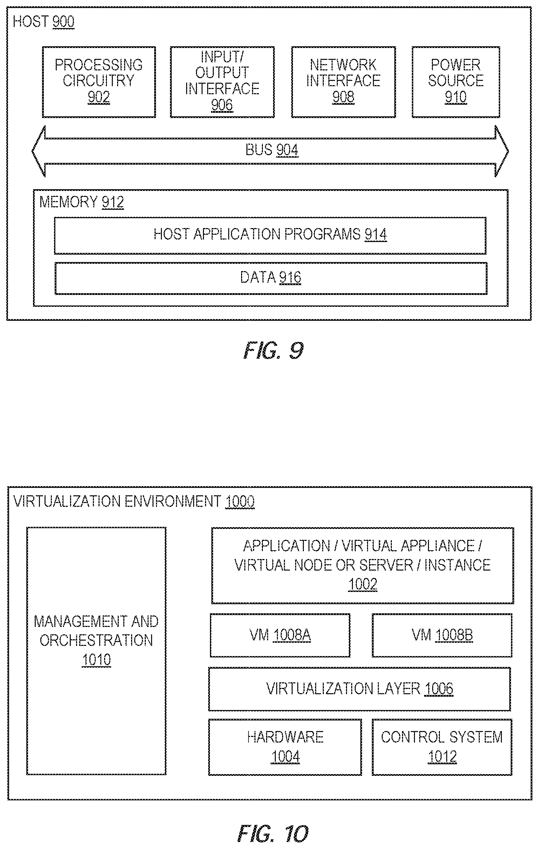

Figure 9 is a block diagram of a host 900, which may be an embodiment of the host 616 of Figure 6, in accordance with various aspects described herein. As used herein, the host 900 may be or comprise various combinations of hardware and/or software including a standalone server, a blade server, a cloud-implemented server, a distributed server, a virtual machine, container, or processing resources in a server farm. The host 900 may provide one or more services to one or more UEs.

The host 900 includes processing circuitry 902 that is operatively coupled via a bus 904 to an input/output interface 906, a network interface 908, a power source 910, and memory 912. Other components may be included in other embodiments. Features of these components may be substantially similar to those described with respect to the devices of previous figures, such as Figures 7 and 8, such that the descriptions thereof are generally applicable to the corresponding components of the host 900.

The memory 912 may include one or more computer programs including one or more host application programs 914 and data 916, which may include user data, e.g., data generated by a UE for the host 900 or data generated by the host 900 for a UE. Embodiments of the host 900 may utilize only a subset or all of the components shown. The host application programs 914 may be implemented in a container-based architecture and may provide support for video codecs (e.g., Versatile Video Coding (VVC), High Efficiency Video Coding (HEVC), Advanced Video Coding (AVC), Moving Picture Experts Group (MPEG), VP9) and audio codecs (e.g., Free Lossless Audio Codec (FLAC), Advanced Audio Coding (AAC), MPEG, G.711), including transcoding for multiple different classes, types, or implementations of UEs (e.g., handsets, desktop computers, wearable display systems, and heads-up display systems). The host application programs 914 may also provide for user authentication and licensing checks and may periodically report health, routes, and content availability to a central node, such as a device in or on the edge of a core network. Accordingly, the host 900 may select and/or indicate a different host for Over-The-Top (OTT) services for a UE. The host application programs 914 may support various protocols, such as the HTTP Live Streaming (HLS) protocol, Real-Time Messaging Protocol (RTMP), Real-Time Streaming Protocol (RTSP), Dynamic Adaptive Streaming over HTTP (DASH or MPEG-DASH), etc.

Figure 10 is a block diagram illustrating a virtualization environment 1000 in which functions implemented by some embodiments may be virtualized. In the present context, virtualizing means creating virtual versions of apparatuses or devices which may include virtualizing hardware platforms, storage devices, and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more Virtual Machines (VMs) implemented in one or more virtual environments 1000 hosted by one or more of hardware nodes, such as a hardware computing device that operates as a network node, UE, core network node, or host. Further, in embodiments in which the virtual node does not require radio connectivity (e.g., a core network node or host), then the node may be entirely virtualized.

Applications 1002 (which may alternatively be called software instances, virtual appliances, network functions, virtual nodes, virtual network functions, etc.) are run in the virtualization environment Q400 to implement some of the features, functions, and/or benefits of some of the embodiments disclosed herein.

Hardware 1004 includes processing circuitry, memory that stores software and/or instructions executable by hardware processing circuitry, and/or other hardware devices as described herein, such as a network interface, input/output interface, and so forth. Software may be executed by the processing circuitry to instantiate one or more virtualization layers 1006 (also referred to as hypervisors or VM Monitors (VMMs)), provide VMs 1008A and 1008B (one or more of which may be generally referred to as VMs 1008), and/or perform any of the functions, features, and/or benefits described in relation with some embodiments described herein. The virtualization layer 1006 may present a virtual operating platform that appears like networking hardware to the VMs 1008.

The VMs 1008 comprise virtual processing, virtual memory, virtual networking, or interface and virtual storage, and may be run by a corresponding virtualization layer 1006. Different embodiments of the instance of a virtual appliance 1002 may be implemented on one or more of the VMs 1008, and the implementations may be made in different ways. Virtualization of the hardware is in some contexts referred to as Network Function Virtualization (NFV). NFV may be used to consolidate many network equipment types onto industry standard high volume server hardware, physical switches, and physical storage, which can be located in data centers and customer premise equipment.

In the context of NFV, a VM 1008 may be a software implementation of a physical machine that runs programs as if they were executing on a physical, non-virtualized machine. Each of the VMs 1008, and that part of the hardware 1004 that executes that VM, be it hardware dedicated to that VM and/or hardware shared by that VM with others of the VMs 1008, forms separate virtual network elements. Still in the context of NFV, a virtual network function is responsible for handling specific network functions that run in one or more VMs 1008 on top of the hardware 1004 and corresponds to the application 1002.

The hardware 1004 may be implemented in a standalone network node with generic or specific components. The hardware 1004 may implement some functions via virtualization. Alternatively, the hardware 1004 may be part of a larger cluster of hardware (e.g., such as in a data center or CPE) where many hardware nodes work together and are managed via management and orchestration 1010, which, among others, oversees lifecycle management of the applications 1002. In some embodiments, the hardware 1004 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a RAN or a BS. In some embodiments, some signaling can be provided with the use of a control system 1012 which may alternatively be used for communication between hardware nodes and radio units.

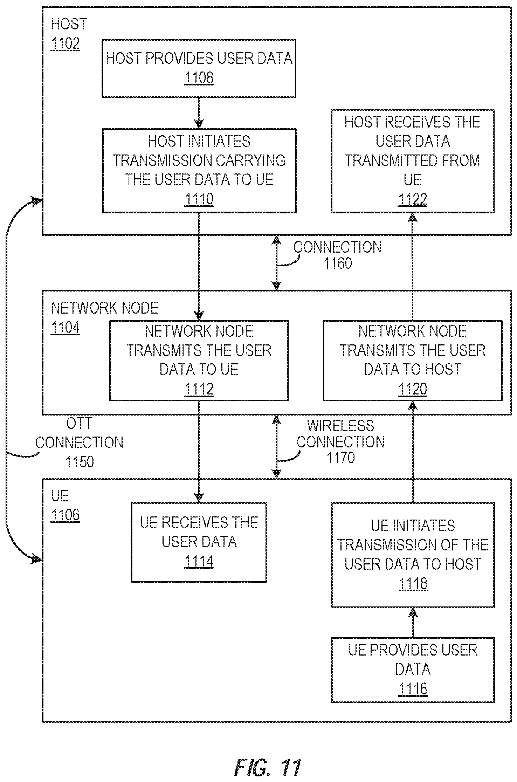

Figure 11 shows a communication diagram of a host 1102 communicating via a network node 1104 with a UE 1106 over a partially wireless connection in accordance with some embodiments. Example implementations, in accordance with various embodiments, of the UE (such as the UE 612A of Figure 6 and/or the UE 700 of Figure 7), the network node (such as the network node 610A of Figure 6 and/or the network node 800 of Figure 8), and the host (such as the host 616 of Figure 6 and/or the host 900 of Figure 9) discussed in the preceding paragraphs will now be described with reference to Figure 11.

Like the host 900, embodiments of the host 1102 include hardware, such as a communication interface, processing circuitry, and memory. The host 1102 also includes software, which is stored in or is accessible by the host 1102 and executable by the processing circuitry. The software includes a host application that may be operable to provide a service to a remote user, such as the UE 1106 connecting via an OTT connection 1150 extending between the UE 1106 and the host 1102. In providing the service to the remote user, a host application may provide user data which is transmitted using the OTT connection 1150.

The network node 1104 includes hardware enabling it to communicate with the host 1102 and the UE 1106 via a connection 1160. The connection 1160 may be direct or pass through a core network (like the core network 606 of Figure 6) and/or one or more other intermediate networks, such as one or more public, private, or hosted networks. For example, an intermediate network may be a backbone network or the Internet.

The UE 1106 includes hardware and software, which is stored in or accessible by the UE 1106 and executable by the UE's processing circuitry. The software includes a client application, such as a web browser or operator-specific "app" that may be operable to provide a service to a human or non-human user via the UE 1106 with the support of the host 1102. In the host 1102, an executing host application may communicate with the executing client application via the OTT connection 1150 terminating at the UE 1106 and the host 1102. In providing the service to the user, the UE's client application may receive request data from the host's host application and provide user data in response to the request data. The OTT connection 1150 may transfer both the request data and the user data. The UE's client application may interact with the user to generate the user data that it provides to the host application through the OTT connection 1150.

The OTT connection 1150 may extend via the connection 1160 between the host 1102 and the network node 1104 and via a wireless connection 1170 between the network node 1104 and the UE 1106 to provide the connection between the host 1102 and the UE 1106. The connection 1160 and the wireless connection 1170, over which the OTT connection 1150 may be provided, have been drawn abstractly to illustrate the communication between the host 1102 and the UE 1106 via the network node 1104, without explicit reference to any intermediary devices and the precise routing of messages via these devices.

As an example of transmitting data via the OTT connection 1150, in step 1108, the host 1102 provides user data, which may be performed by executing a host application. In some embodiments, the user data is associated with a particular human user interacting with the UE 1106. In other embodiments, the user data is associated with a UE 1106 that shares data with the host 1102 without explicit human interaction. In step 1110, the host 1102 initiates a transmission carrying the user data towards the UE 1106. The host 1102 may initiate the transmission responsive to a request transmitted by the UE 1106. The request may be caused by human interaction with the UE 1106 or by operation of the client application executing on the UE 1106. The transmission may pass via the network node 1104 in accordance with the teachings of the embodiments described throughout this disclosure. Accordingly, in step 1112, the network node 1104 transmits to the UE 1106 the user data that was carried in the transmission that the host 1102 initiated, in accordance with the teachings of the embodiments described throughout this disclosure. In step 1114, the UE 1106 receives the user data carried in the transmission, which may be performed by a client application executed on the UE 1106 associated with the host application executed by the host 1102.

In some examples, the UE 1106 executes a client application which provides user data to the host 1102. The user data may be provided in reaction or response to the data received from the host 1102. Accordingly, in step 1116, the UE 1106 may provide user data, which may be performed by executing the client application. In providing the user data, the client application may further consider user input received from the user via an input/output interface of the UE 1106. Regardless of the specific manner in which the user data was provided, the UE 1106 initiates, in step 1118, transmission of the user data towards the host 1102 via the network node 1104. In step 1120, in accordance with the teachings of the embodiments described throughout this disclosure, the network node 1104 receives user data from the UE 1106 and initiates transmission of the received user data towards the host 1102. In step 1122, the host 1102 receives the user data carried in the transmission initiated by the UE 1106.

One or more of the various embodiments improve the performance of OTT services provided to the UE 1106 using the OTT connection 1150, in which the wireless connection 1170 forms the last segment. More precisely, the teachings of these embodiments may improve the e.g., data rate, latency, power consumption, etc. and thereby provide benefits such as e.g., reduced user waiting time, relaxed restriction on file size, improved content resolution, better responsiveness, extended battery lifetime, etc.

In an example scenario, factory status information may be collected and analyzed by the host 1102. As another example, the host 1102 may process audio and video data which may have been retrieved from a UE for use in creating maps. As another example, the host 1102 may collect and analyze real-time data to assist in controlling vehicle congestion (e.g., controlling traffic lights). As another example, the host 1102 may store surveillance video uploaded by a UE. As another example, the host 1102 may store or control access to media content such as video, audio, VR, or AR which it can broadcast, multicast, or unicast to UEs. As other examples, the host 1102 may be used for energy pricing, remote control of non-time critical electrical load to balance power generation needs, location services, presentation services (such as compiling diagrams etc. from data collected from remote devices), or any other function of collecting, retrieving, storing, analyzing, and/or transmitting data.

In some examples, a measurement procedure may be provided for the purpose of monitoring data rate, latency, and other factors on which the one or more embodiments improve. There may further be an optional network functionality for reconfiguring the OTT connection 1150 between the host 1102 and the UE 1106 in response to variations in the measurement results. The measurement procedure and/or the network functionality for reconfiguring the OTT connection 1150 may be implemented in software and hardware of the host 1102 and/or the UE 1106. In some embodiments, sensors (not shown) may be deployed in or in association with other devices through which the OTT connection 1150 passes; the sensors may participate in the measurement procedure by supplying values of the monitored quantities exemplified above, or by supplying values of other physical quantities from which software may compute or estimate the monitored quantities. The reconfiguring of the OTT connection 1150 may include message format, retransmission settings, preferred routing, etc.; the reconfiguring need not directly alter the operation of the network node 1104. Such procedures and functionalities may be known and practiced in the art. In certain embodiments, measurements may involve proprietary UE signaling that facilitates measurements of throughput, propagation times, latency, and the like by the host 1102. The measurements may be implemented in that software causes messages to be transmitted, in particular empty or 'dummy' messages, using the OTT connection 1150 while monitoring propagation times, errors, etc.

Although the computing devices described herein (e.g., UEs, network nodes, hosts) may include the illustrated combination of hardware components, other embodiments may comprise computing devices with different combinations of components. It is to be understood that these computing devices may comprise any suitable combination of hardware and/or software needed to perform the tasks, features, functions, and methods disclosed herein. Determining, calculating, obtaining, or similar operations described herein may be performed by processing circuitry, which may process information by, for example, converting the obtained information into other information, comparing the obtained information or converted information to information stored in the network node, and/or performing one or more operations based on the obtained information or converted information, and as a result of said processing making a determination. Moreover, while components are depicted as single boxes located within a larger box or nested within multiple boxes, in practice computing devices may comprise multiple different physical components that make up a single illustrated component, and functionality may be partitioned between separate components. For example, a communication interface may be configured to include any of the components described herein, and/or the functionality of the components may be partitioned between the processing circuitry and the communication interface. In another example, non-computationally intensive functions of any of such components may be implemented in software or firmware and computationally intensive functions may be implemented in hardware.

In certain embodiments, some or all of the functionality described herein may be provided by processing circuitry executing instructions stored in memory, which in certain embodiments may be a computer program product in the form of a non-transitory computer-readable storage medium. In alternative embodiments, some or all of the functionality may be provided by the processing circuitry without executing instructions stored on a separate or discrete device-readable storage medium, such as in a hardwired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the computing device but are enjoyed by the computing device as a whole and/or by end users and a wireless network generally.

At least some of the following abbreviations may be used in this disclosure. If there is an inconsistency between abbreviations, preference should be given to how it is used above. If listed multiple times below, the first listing should be preferred over any subsequent listing(s).

| | |
|---|---|
| • 3GPP | Third Generation Partnership Project |
| • 5G | Fifth Generation |
| • 5GC | Fifth Generation Core |
| • 5GS | Fifth Generation System |
| • AF | Application Function |
| • AMF | Access and Mobility Function |
| • AN | Access Network |
| • AP | Access Point |
| • ASIC | Application Specific Integrated Circuit |
| • AUSF | Authentication Server Function |
| • CPU | Central Processing Unit |
| • DN | Data Network |
| • DSP | Digital Signal Processor |
| • eNB | Enhanced or Evolved Node B |
| • EPS | Evolved Packet System |
| • E-UTRA | Evolved Universal Terrestrial Radio Access |
| • FPGA | Field Programmable Gate Array |
| • gNB | New Radio Base Station |
| • gNB-DU | New Radio Base Station Distributed Unit |
| • HSS | Home Subscriber Server |
| • IoT | Internet of Things |
| • IP | Internet Protocol |
| • LTE | Long Term Evolution |
| • MME | Mobility Management Entity |
| • MTC | Machine Type Communication |
| • NEF | Network Exposure Function |
| • NF | Network Function |
| • NR | New Radio |
| • NRF | Network Function Repository Function |
| • NSSF | Network Slice Selection Function |
| • OTT | Over-the-Top |
| • PC | Personal Computer |
| • PCF | Policy Control Function |
| • P-GW | Packet Data Network Gateway |
| • QoS | Quality of Service |
| • RAM | Random Access Memory |
| • RAN | Radio Access Network |
| • ROM | Read Only Memory |
| • RRH | Remote Radio Head |
| • RTT | Round Trip Time |
| • SCEF | Service Capability Exposure Function |
| • SMF | Session Management Function |
| • UDM | Unified Data Management |
| • UE | User Equipment |
| • UPF | User Plane Function |

Those skilled in the art will recognize improvements and modifications to the embodiments of the present disclosure. The invention is defined by the appended claims.

## Claims

1. A method performed by a Centralized Unit, CU, of a base station, the method comprising:
providing (500) information to a Distributed Unit, DU, of the base station to indicate which groups of Radio Link Control, RLC, Service Data Units, SDUs, belong to a unique Application Data Unit, ADU, which needs to be delivered within a same time budget; and
adding (502) ADU related information on each of a plurality of Packet Data Convergence Protocol, PDCP, Protocol Data Unit, PDUs, to allow an RLC entity to be aware which RLC SDU belongs to which unique ADU.

2. The method of claim 1 wherein the information is provided from a PDCP layer of the CU; and/or
wherein the information is provided to an RLC layer of the DU.

3. The method of claim 1 or 2 wherein, if the groups of RLC SDUs belonging to the unique ADU are not delivered within the same time budget, one or more are dropped; and/or
wherein a timer for discarding is signaled by a PDCP entity.

4. The method of any of claims 1-3 wherein adding the ADU related information on each PDCP PDU enables the DU and the RLC layer to efficiently apply ADU-level resource allocation or cancellation; and
wherein, optionally, the ADU-level resource allocation or cancellation comprises dropping in an ADU level.

5. The method of any of claims 1-4 wherein ADU flow control indicates a different Packet Delay Budget, PDB, of the different PDCP PDUs of the ADU; and/or
wherein, when the timer expires, the RLC entity will discard the ADUs not transmitted,
wherein the method optionally further comprises: informing the PDCP entity.

6. The method of any of claims 1-5 further comprising one or more of:
enabling the decision of dropping of PDCP and/or RLC PDUs related to the ADU groups to be done at the RLC layer;
enabling the RLC layer to discard the received ADU/PDCP PDU when the timer for discarding has expired;
sending a new type of flow control information on an ADU level;
indicating to the DU which ADUs should be discarded by the RLC entity; and
delivering the timer together with the ADU to the DU.

7. A method performed by a Distributed Unit, DU, of a base station, the method comprising:
receiving (504) information from a Centralized Unit, CU, of the base station to indicate which groups of Radio Link Control, RLC, Service Data Units, SDUs, belong to a unique Application Data Unit, ADU, which needs to be delivered within a same time budget; and
receiving (506) added ADU related information on different Packet Data Convergence Protocol, PDCP, Protocol Data Unit, PDUs, to allow an RLC entity to be aware which RLC SDU belongs to which unique ADU.

8. The method of claim 7 wherein the information is received from a PDCP layer of the CU.

9. The method of any of claims 7-8 wherein the information is received by an RLC layer of the DU; and/or
wherein, if the groups of RLC SDUs belonging to the unique ADU are not delivered within the same time budget, one or more are dropped; and/or
wherein a timer for discarding is signaled by a PDCP entity.

10. The method of any of claims 7-9 wherein adding the ADU related information on each PDCP PDU enables the DU and the RLC layer to efficiently apply ADU-level resource allocation or cancellation; and
wherein, optionally, the ADU-level resource allocation or cancellation comprises dropping in an ADU level.

11. The method of any of claims 7-10 wherein ADU flow control indicates a different Packet Delay Budget, PDB, of the different PDCP PDUs of the ADU.

12. The method of any of claims 7-8 wherein, when the timer expires, the RLC entity will discard the ADUs not transmitted; and
optionally further comprising: informing the PDCP entity.

13. The method of any of claims 7-12 further comprising one or more of:
enabling the decision of dropping of Packet Data Convergence Protocol, PDCP, and/or RLC PDUs related to the ADU groups to be done at the RLC layer;
enabling the RLC layer to discard the received ADU/PDCP PDU when the timer for discarding has expired;
receiving a new type of flow control information on an ADU level;
receiving an indication from the CU which ADUs should be discarded by the RLC entity; and
receiving the timer together with the ADU from the CU.

14. A Centralized Unit, CU, of a base station (800), the CU (800) comprising processing circuitry (802) and memory (804), the memory (804) comprising instructions, which when executed by the processing circuitry (802), cause the processing circuitry (802) to perform the method of any of any one of claims 1-6.

15. A Distributed Unit, DU, of a base station (800), the DU (800) comprising processing circuitry (802) and memory (804), the memory (804) comprising instructions, which when executed by the processing circuitry (802), cause the processing circuitry (802) to perform the method of any of claims 7-13.

## Patentansprüche

1. Verfahren, das von einer zentralen Einheit, CU, einer Basisstation durchgeführt wird, wobei das Verfahren Folgendes umfasst:
Bereitstellen (500) von Informationen an eine verteilte Einheit, DU, der Basisstation, um anzugeben, welche Gruppen von Funkverbindungssteuerungs-Dienstdateneinheiten, RLC-SDUs, zu einer eindeutigen Anwendungsdateneinheit, ADU, gehören, die innerhalb eines gleichen Zeitbudgets geliefert werden muss; und
Hinzufügen (502) von ADU-bezogenen Informationen auf jeder von einer Mehrzahl von Paketdatenkonvergenzprotokoll-Protokolldateneinheiten, PDCP-PDUs, um einer RLC-Entität zu ermöglichen, zu erkennen, welche RLC-SDU zu welcher eindeutigen ADU gehört.

2. Verfahren nach Anspruch 1, wobei die Informationen von einer PDCP-Schicht der CU bereitgestellt werden; und/oder
wobei die Informationen an eine RLC-Schicht der DU bereitgestellt werden.

3. Verfahren nach Anspruch 1 oder 2, wobei, falls die Gruppen von RLC-SDUs, die zu der eindeutigen ADU gehören, nicht innerhalb des gleichen Zeitbudgets geliefert werden, eine oder mehrere davon fallengelassen werden; und/oder
wobei ein Zeitgeber zum Verwerfen von einer PDCP-Entität signalisiert wird.

4. Verfahren nach einem der Ansprüche 1-3, wobei das Hinzufügen der ADU-bezogenen Informationen auf jeder PDCP-PDU der DU und der RLC-Schicht ermöglicht, Zuweisung oder Stornierung von Ressourcen auf ADU-Ebene effizient anzuwenden; und
wobei optional die Zuweisung oder Stornierung von Ressourcen auf ADU-Ebene Einfügen einer ADU-Ebene umfasst.

5. Verfahren nach einem der Ansprüche 1-4, wobei ADU-Flusssteuerung ein unterschiedliches Paketverzögerungsbudget, PDB, der verschiedenen PDCP-PDUs der ADU angibt; und/oder
wobei bei Ablaufen des Zeitgebers die RLC-Entität die nicht gesendeten ADUs verwirft,
wobei das Verfahren optional ferner Folgendes umfasst: Informieren der PDCP-Entität.

6. Verfahren nach einem der Ansprüche 1-5, ferner umfassend eines oder mehreres von Folgendem:
Ermöglichen, dass die Entscheidung hinsichtlich des Fallenlassens von PDCP- und/oder RLC-PDUs in Bezug auf die ADU-Gruppen auf der RLC-Schicht erfolgt;
Ermöglichen, dass die RLC-Schicht die empfangene ADU/PDCP-PDU verwirft, wenn der Zeitgeber zum Verwerfen abgelaufen ist;
Senden eines neuen Typs von Flusssteuerungsinformationen auf einer ADU-Ebene;
Angeben für die DU, welche ADUs von der RLC-Entität verworfen werden sollten; und
Liefern des Zeitgebers zusammen mit der ADU an die DU.

7. Verfahren, das von einer verteilten Einheit, DU, einer Basisstation durchgeführt wird, wobei das Verfahren Folgendes umfasst:
Empfangen (504) von Informationen von einer zentralen Einheit, CU, der Basisstation, um anzugeben, welche Gruppen von Funkverbindungssteuerungs-Dienstdateneinheiten, RLC-SDUs, zu einer eindeutigen Anwendungsdateneinheit, ADU, gehören, die innerhalb eines gleichen Zeitbudgets geliefert werden muss; und
Empfangen (506) von hinzugefügten ADU-bezogenen Informationen auf verschiedenen Paketdatenkonvergenzprotokoll-Protokolldateneinheiten, PDCP-PDUs, um einer RLC-Entität zu ermöglichen, zu erkennen, welche RLC-SDU zu welcher eindeutigen ADU gehört.

8. Verfahren nach Anspruch 7, wobei die Informationen von einer PDCP-Schicht der CU empfangen werden.

9. Verfahren nach Anspruch 7-8, wobei die Informationen durch eine RLC-Schicht der DU empfangen werden; und/oder
wobei, falls die Gruppen von RLC-SDUs, die zu der eindeutigen ADU gehören, nicht innerhalb des gleichen Zeitbudgets geliefert werden, eine oder mehrere davon fallengelassen werden; und/oder
wobei ein Zeitgeber zum Verwerfen von einer PDCP-Entität signalisiert wird.

10. Verfahren nach einem der Ansprüche 7-9, wobei das Hinzufügen der ADU-bezogenen Informationen auf jeder PDCP-PDU der DU und der RLC-Schicht ermöglicht, Zuweisung oder Stornierung von Ressourcen auf ADU-Ebene effizient anzuwenden; und
wobei optional die Zuweisung oder Stornierung von Ressourcen auf ADU-Ebene Einfügen einer ADU-Ebene umfasst.

11. Verfahren nach einem der Ansprüche 7-10, wobei ADU-Flusssteuerung ein unterschiedliches Paketverzögerungsbudget, PDB, der verschiedenen PDCP-PDUs der ADU angibt.

12. Verfahren nach einem der Ansprüche 7-8, wobei bei Ablaufen des Zeitgebers die RLC-Entität die nicht gesendeten ADUs verwirft; und
optional ferner umfassend: Informieren der PDCP-Entität.

13. Verfahren nach Anspruch 7-12, ferner umfassend eines oder mehreres von Folgendem:
Ermöglichen, dass die Entscheidung hinsichtlich des Fallenlassens von Paketdatenkonvergenzprotokoll-,PDCP-, und/oder RLC-PDUs in Bezug auf die ADU-Gruppen auf der RLC-Schicht erfolgt;
Ermöglichen, dass die RLC-Schicht die empfangene ADU/PDCP-PDU verwirft, wenn der Zeitgeber zum Verwerfen abgelaufen ist;
Empfangenen eines neuen Typs von Flusssteuerungsinformationen auf einer ADU-Ebene;
Empfangen einer Angabe von der CU, welche ADUs von der RLC-Entität verworfen werden sollten; und
Empfangen des Zeitgebers zusammen mit der ADU von der CU.

14. Zentrale Einheit, CU, einer Basisstation (800), wobei die CU (800) Verarbeitungsschaltungsanordnung (802) und Speicher (804) umfasst, wobei der Speicher (804) Anweisungen umfasst, die bei Ausführung durch die Verarbeitungsschaltungsanordnung (802) die Verarbeitungsschaltungsanordnung (802) zum Durchführen des Verfahrens nach einem der Ansprüche 1-6 veranlassen.

15. Verteilte Einheit, DU, einer Basisstation (800), wobei die DU (800) Verarbeitungsschaltungsanordnung (802) und Speicher (804) umfasst, wobei der Speicher (804) Anweisungen umfasst, die bei Ausführung durch die Verarbeitungsschaltungsanordnung (802) die Verarbeitungsschaltungsanordnung (802) zum Durchführen des Verfahrens nach einem der Ansprüche 7-13 veranlassen.

## Revendications

1. Procédé réalisé par une unité centralisée, CU, d'une station de base, le procédé comprenant :
la fourniture (500) d'informations à une unité distribuée, DU, de la station de base pour indiquer quels groupes d'unités de données de service, SDU, de commande de liaison radio, RLC, appartiennent à une unité de données d'application, ADU, unique qui doit être distribuée dans un même budget de temps ; et
l'ajout (502) d'informations liées à l'ADU à chacune d'une pluralité d'unités de données de protocole, PDU, de protocole de convergence de données en paquets, PDCP, pour permettre à une entité RLC de savoir quelle SDU RLC appartient à quelle ADU unique.

2. Procédé selon la revendication 1, dans lequel les informations sont fournies depuis une couche PDCP de la CU ; et/ou
dans lequel les informations sont fournies à une couche RLC de la DU.

3. Procédé selon la revendication 1 ou 2, dans lequel, si les groupes de SDU RLC appartenant à l'ADU unique ne sont pas distribués dans le même budget de temps, un ou plusieurs d'entre eux sont abandonnés ; et/ou
dans lequel une minuterie de rejet est signalée par une entité PDCP.

4. Procédé selon l'une quelconque des revendications 1 à 3, dans lequel l'ajout des informations liées à l'ADU à chaque PDU PDCP permet à la DU et à la couche RLC d'appliquer efficacement une allocation ou une annulation de ressources au niveau de l'ADU ; et
dans lequel, facultativement, l'allocation ou l'annulation de ressources au niveau de l'ADU comprend l'abandon au niveau de l'ADU.

5. Procédé selon l'une quelconque des revendications 1 à 4, dans lequel une régulation de débit d'ADU indique un budget de retard de paquets, PDB, différent des différentes PDU PDCP de l'ADU ; et/ou
dans lequel, à l'expiration de la minuterie, l'entité RLC rejette les ADU qui n'ont pas été transmises,
dans lequel le procédé comprend en outre facultativement : l'information de l'entité PDCP.

6. Procédé selon l'une quelconque des revendications 1 à 5, comprenant en outre un ou plusieurs parmi :
le fait de permettre à la décision d'abandon de PDU PDCP et/ou RLC liées aux groupes d'ADU d'être prise au niveau de la couche RLC ;
le fait de permettre à la couche RLC de rejeter la PDU ADU/PDCP reçue à l'expiration de la minuterie de rejet ;
l'envoi d'un nouveau type d'informations de régulation de débit au niveau de l'ADU ;
l'indication, à la DU, des ADU qui doivent être rejetées par l'entité RLC ; et
la distribution de la minuterie avec l'ADU à la DU.

7. Procédé réalisé par une unité distribuée, DU, d'une station de base, le procédé comprenant :
la réception (504) d'informations depuis une unité centralisée, CU, de la station de base pour indiquer quels groupes d'unités de données de service, SDU, de commande de liaison radio, RLC, appartiennent à une unité de données d'application, ADU, unique qui doit être distribuée dans un même budget de temps ; et
la réception (506) d'informations liées à l'ADU ajoutées à différentes unités de données de protocole, PDU, de protocole de convergence de données en paquets, PDCP, pour permettre à une entité RLC de savoir quelle SDU RLC appartient à quelle ADU unique.

8. Procédé selon la revendication 7, dans lequel les informations sont reçues depuis une couche PDCP de la CU.

9. Procédé selon l'une quelconque des revendications 7 et 8, dans lequel les informations sont reçues par une couche RLC de la DU ; et/ou
dans lequel, si les groupes de SDU RLC appartenant à l'ADU unique ne sont pas distribués dans le même budget de temps, un ou plusieurs d'entre eux sont abandonnés ; et/ou
dans lequel une minuterie de rejet est signalée par une entité PDCP.

10. Procédé selon l'une quelconque des revendications 7 à 9, dans lequel l'ajout des informations liées à l'ADU à chaque PDU PDCP permet à la DU et à la couche RLC d'appliquer efficacement une allocation ou une annulation de ressources au niveau de l'ADU ; et
dans lequel, facultativement, l'allocation ou l'annulation de ressources au niveau de l'ADU comprend l'abandon au niveau de l'ADU.

11. Procédé selon l'une quelconque des revendications 7 à 10, dans lequel une régulation de débit d'ADU indique un budget de retard de paquets, PDB, différent des différentes PDU PDCP de l'ADU.

12. Procédé selon l'une quelconque des revendications 7 et 8, dans lequel, à l'expiration de la minuterie, l'entité RLC rejette les ADU qui n'ont pas été transmises ; et
comprenant en outre facultativement : l'information de l'entité PDCP.

13. Procédé selon l'une quelconque des revendications 7 à 12, comprenant en outre un ou plusieurs parmi :
le fait de permettre à la décision d'abandon de PDU de protocole de convergence de données en paquets, PDCP, et/ou RLC liées aux groupes d'ADU d'être prise au niveau de la couche RLC ;
le fait de permettre à la couche RLC de rejeter la PDU ADU/PDCP reçue à l'expiration de la minuterie de rejet ;
la réception d'un nouveau type d'informations de régulation de débit au niveau de l'ADU ;
la réception d'une indication, depuis la CU, des ADU qui doivent être rejetées par l'entité RLC ; et
la réception de la minuterie avec l'ADU depuis la CU.

14. Unité centralisée, CU, d'une station de base (800), la CU (800) comprenant une circuiterie de traitement (802) et une mémoire (804), la mémoire (804) comprenant des instructions qui, lorsqu'elles sont exécutées par la circuiterie de traitement (802), amènent la circuiterie de traitement (802) à réaliser le procédé selon l'une quelconque des revendications 1 à 6.

15. Unité distribuée, DU, d'une station de base (800), la DU (800) comprenant une circuiterie de traitement (802) et une mémoire (804), la mémoire (804) comprenant des instructions qui, lorsqu'elles sont exécutées par la circuiterie de traitement (802), amènent la circuiterie de traitement (802) à réaliser le procédé selon l'une quelconque des revendications 7 à 13.
